# EUROPÄISCHE PATENTSCHRIFT

(11) **EP 0 827 847 B1**
(45) Veröffentlichungstag und Bekanntmachung des Hinweises auf die Patenterteilung: **10.04.2002**
(21) Anmeldenummer: 97110181.1
(22) Anmeldetag: 21.06.1997
(51) Int. Cl.: B60G 9/02

(54) **Zentrallager für eine Hinterachse eines Kraftfahrzeuges**
Central bearing for a rear axle of a motor car
Palier central pour un essieu arrière d'une voiture automobile

(30) Priorität: 24.08.1996 DE 19634215
(43) Veröffentlichungstag der Anmeldung: 11.03.1998
(73) Patentinhaber: Dr.Ing.h.c. F. Porsche Aktiengesellschaft, 70435 Stuttgart (DE)
(72) Erfinder: Germano, Francesco, 74321 Bietigheim-Bissingen (DE)

(56) Entgegenhaltungen:
- EP-A- 0 140 845
- DE-A- 1 911 795
- DE-A- 3 521 361
- DE-A- 3 741 440
- FR-A- 2 407 399
- FR-A- 2 602 292
- GB-A- 2 048 795
- GB-A- 2 056 382

## Beschreibung

Die Erfindung bezieht sich auf ein Zentrallager in einer Hinterachse eines Kraftfahrzeuges nach dem Oberbegriff des Anspruchs 1.

Aus der DE 26 25 374 A1 ist ein elastisches Lager für eine Radaufhängung bekannt, das mittig angeordnet ist und elastische Ringelemente umfaßt, die eine Tordierung von zwei miteinander verbundenen Achsenden jeder Radseite ermöglicht.

Aus der GB 2 056 382 A ist bereits eine Hinterachse mit einem Mittenlager nach dem Oberbegriff des Anspruchs 1 bekannt geworden, wobei das Mittenlager 2 zwischen starr angeordneten Flanschen angeordnete buchsenförmige elastische Elemente aufweist.

Schließlich ist es aus der FR 2 602 929 A1 bekannt, bei einem hydraulischen Lager die elastischen Lagerelemente schräg anzustellen und an einem doppelkonischen, zweiteilig ausgeführten Kernstück abzustützen.

Die Aufgabe der Erfindung besteht darin, eine Hinterachse für ein Kraftfahrzeug mit einem Zentrallager zu schaffen, das einen geringen Bauaufwand erfordert und definierte Kennungen in Längs-, Quer- und Hochrichtung gewährleistet.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß das Zentrallager, bestehend aus zwei Lagerelementen, einen geringen Bauaufwand zum Herstellen erfordert und die Kennungen in den verschiedenen Belastungsrichtungen beim Zusammensetzen der beiden Lagerelemente entsprechend eingestellt werden können.

Ein Zusammenspannen der beiden vereinzelten Lagerelemente erfolgt mittels eines übergreifenden Ringbügels, der wiederum in einer Hülse gehalten ist, welche Teil einer Lagerkonsole ist, die mit dem Steg eines U-förmigen Bügels der Hinterachse verbunden wird.

An einem Lagerachsenträger der beiden Lagerelemente sind zwei schrägliegende Stützflächen gebildet, denen gegenüberliegend Stützflächen des Ringbügels sind. Zwischen diesen Stützflächen sind die Lagerelemente kardanisch bewegbar. Im ungespannten Zustand der beiden aus elastischen Ringen bestehenden Lagerelemente, steht das Rohrteil des Lagerachsenträgers jeweils um ein Maß vor, welches dem Maß der Zusammenpressung der elastischen Elemente im zusammengebauten Zustand entspricht.

Als elastischer Anschlag können radial sich erstreckende Polster dienen, die von beiden elastischen Lagerelementen im zusammenstoßenden Bereich gebildet werden und dem Ringbügel zugerichtet sind.

Ein Ausführungsbeispiel der Erfindung ist in den Zeichnungen dargestellt und wird im folgenden näher beschrieben.

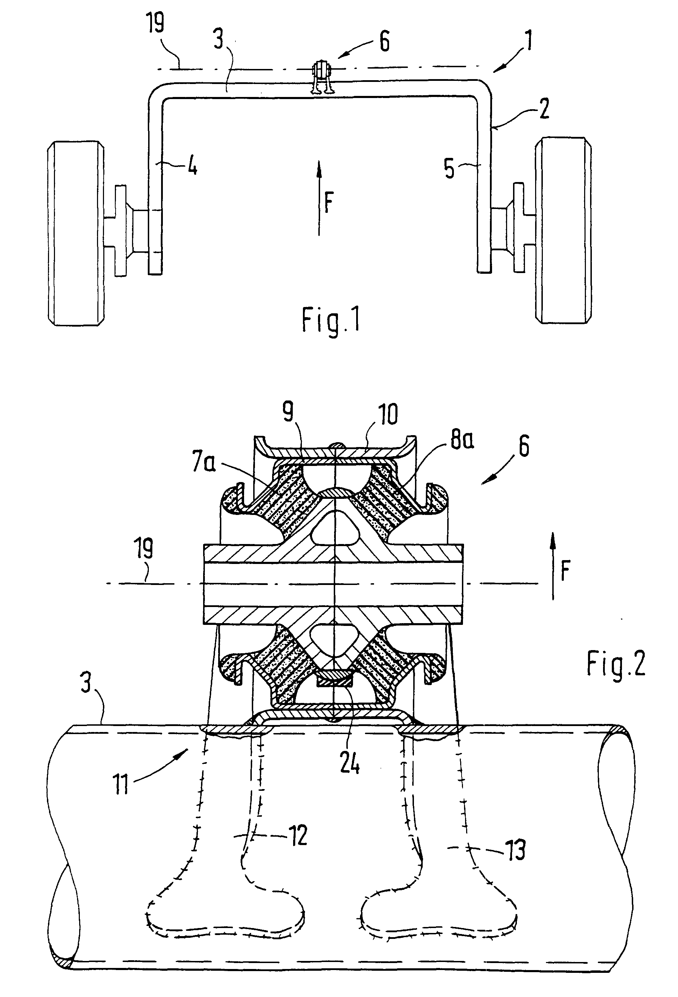

Es zeigen
- Fig. 1: eine schematische Darstellung einer Hinterachse für ein Kraftfahrzeug mit Zentrallager,
- Fig. 2: einen Horizontalschnitt durch das Zentrallager mit Anbindung an die Hinterachse,
- Fig. 3: einen Schnitt durch das Zentrallager vor einem zusammengebauten Zustand,

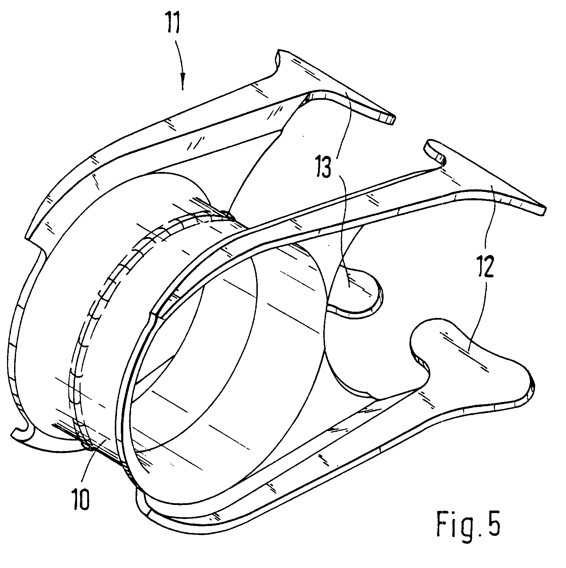

- Fig. 4: einen Schnitt durch das Zentrallager im zusammengebauten Zustand und
- Fig. 5: eine schaubildliche Darstellung einer das Zentrallager aufnehmenden Lagerkonsole.

Eine Hinterachse 1 besteht im wesentlichen aus einem U-förmigen Bügel 2 mit einem sich in Fahrzeugquerrichtung erstreckenden Steg 3 und anschließenden sich in Fahrzeuglängsrichtung erstreckenden Schenkeln 4 und 5. An den freien Enden dieser Schenkel 4, 5 sind die Räder über Radträgeraufnahmen gehalten. Die Hinterachse 1 ist über ein Zentrallager 6 am Fahrzeugaufbau gelagert und kann somit die Räder um eine Querachse und Schrägachsen verschwenken.

Das Zentrallager 6 ist aus zwei getrennten Lagerelementen 7, 8 gebildet, die in einem Ringbügel 9 zusammen befestigt gehalten sind. Der Ringbügel 9 ist wiederum in einer Hülse 10 einer Lagerkonsole 11 angeordnet. Diese ist über Arme 12, 13 mit dem Steg 3 der Hinterachse 1 verbunden.

Die Lagerelemente 7, 8 umfassen elastische Ringe 7a, 8a, welche auf einem Lagerachsenträger 14 zwischen angeformten Stützflächen 15, 16 und Stützflächen 17, 18 des Ringbügels gehalten sind. Diese Stützflächen 15, 16 sind zu den weiteren Stützflächen 17, 18 etwa parallel angeordnet und stehen unter einem Winkel schräg zur Lagerachse 19. Die beiden Stützflächen 15, 16 des Lagerachsenträgers 14 ergänzen sich zu einem etwa rechtwinkeligen, vorragenden Stützelement S.

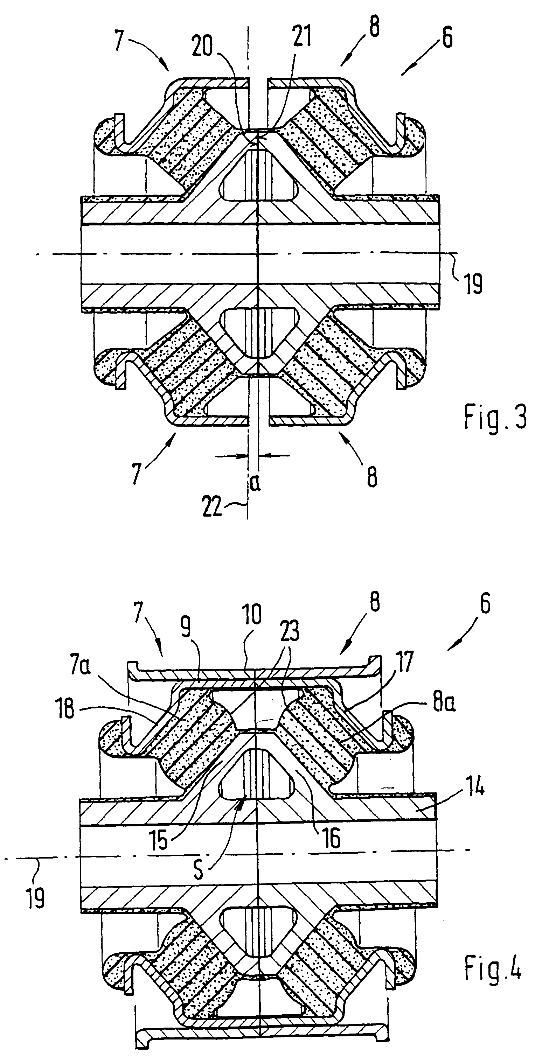

Wie in Fig. 3, in einem noch nicht zusammengebauten und ungespannten Zustand der Lagerelemente 7, 8 zu erkennen ist, stehen die Stirnflächen 20, 21 der Lagerelemente 7, 8 mit einem Abstand a vor der eigentlichen Verbindungsebene 22. Im zusammengebauten Zustand der Lagerelemente 7, 8 werden die elastischen Ringe 7a, 8a soweit zusammengepreßt, daß sich Wülste 23 an den elastischen Ringen 7a, 8a ergeben, welche einen gewissen Vorhalt für eine langlebige Elastizität ergeben.

Über das Zentrallager 6 kann eine kardanische Bewegung der Achse durchgeführt werden, wobei Torsionskräfte aufzunehmen sind. Desweiteren können definierte Kräfte in Hoch-, Quer- und Längsrichtung aufgenommen werden. Über elastische Anschläge 24, kann eine Begrenzung der Bewegung des Zentrallagers 1 in Längs- und Hochrichtung erzielt werden.

## Patentansprüche

1. Zentrallager in einer Hinterachse (1) eines Kraftfahrzeuges, wobei die Hinterachse aus einem U-förmigen Bügel (2) besteht, mit dessen freie Schenkelenden (4, 5) über Aufnahmen Räder verbunden sind, **dadurch gekennzeichnet, daß**
- das Zentrallager (6) zwei zusammengesetzte elastische Lagerelemente (7, 8) umfaßt, die durch einen Ringbügel (9) zusammengehalten sind und die eine parallel zum Steg (3) des Hinterachs-Bügels (2) angeordnete Lagerachse (19) in einem Lagerachsenträger (14) aufweisen,
- die Lagerachsenträger (14) jeweils aus einem Rohrteil mit einer angeformten und schräg zur Lagerachse (19) angeordneten Stützfläche (15, 16) besteht und die Stützflächen beider Lagerelemente (7, 8) radial vorragend ein etwa rechtwinkelig ausgebildetes Stützelement (S) bilden,
- die Lagerelemente (7, 8) in einer Hülse (10) einer am Hinterachs-Bügel (2) befestigten Lagerkonsole (11) gehalten sind,
- die Lagerelemente (7, 8) aus elastischen Ringen (7a, 8a) bestehen, welche zwischen den etwa parallel angeordneten Stützflächen (15, 16 und 17, 18) des Lagerachsenträgers (14) und des Ringbügels (9) gehalten sind.
- die elastischen Ringe (7a, 8a) zwischen den Stützflächen (15, 16 und 17, 18) um einen Betrag (a) zusammengepresst sind, welcher sich aus einem Überstand (a) des Lagerachsenträgers (14) zum umgreifenden Ringbügel (9) ergibt.

2. Zentrallager nach Anspruch 1, **dadurch gekennzeichnet, daß** die elastischen Ringe (7a, 8a) im Bereich der zusammenstoßenden Stützflächen (15, 16) ein übergreifendes elastisches Ringpolster (24) als elastischen Radialanschlag aufweisen.

## Claims

1. A central bearing in a rear axle (1) of a motor vehicle, wherein the rear axle comprises a U-shaped yoke (2), to the free arm ends (4, 5) of which wheels are connected by way of receiving means, **characterized in that**
- the central bearing (6) comprises two resilient bearing members (7, 8) joined together and held together by an annular yoke (9) and comprising a bearing axle (19) - arranged parallel to the web (3) of the rear-axle yoke (2) - in a bearing-axle support (14).
- the bearing-axle support (14) comprises a respective tube part with a support face (15, 16) integrally formed thereon and arranged obliquely to the bearing axle (19), and the support faces of the two bearing members (7, 8) projecting radially form a support member (**S**) formed at a right angle,
- the bearing members (7, 8) are held in a sleeve (10) of a bearing bracket (11) secured to the rear-axle yoke (2),
- the bearing members (7, 8) comprise resilient rings (7a, 8a) held between the support faces (15, 16 and 17, 18) - arranged substantially parallel - of the bearing-axle support (14) and the annular yoke (9), and
- the resilient rings (7a, 8a) between the support faces (15, 16 and 17, 18) are pressed together by an amount (**a**) which is formed by an excess length (**a**) of the bearing-axle support (14) with respect to the annular yoke (9) engaging therearound.

2. A central bearing according to Claim 1, **characterized in that** in the region of the abutting support faces (15, 16) the resilient rings (7a, 8a) have a resilient annular cushion (24) engaging thereover as a resilient radial stop.

## Revendications

1. Palier central dans un essieu arrière (1) de véhicule automobile, l'essieu arrière étant constitué d'un étrier (2) en U dont les extrémités de branche (4, 5) libres sont reliées à des roues par des logements, **caractérisé en ce que**
- le palier central (6) comprend deux éléments de palier (7, 8) élastiques assemblés qui sont maintenus ensemble par un étrier annulaire (9) et qui présentent un axe de palier (19) disposé parallèlement à la traverse (3) de l'étrier (2) de l'essieu arrière, dans un support (14) de l'axe de palier,
- les supports (14) des axes de palier sont constitués chacun d'un élément tubulaire avec une surface d'appui (15, 16) venue de moulage et disposée obliquement par rapport à l'axe de palier (19), et les surfaces d'appui des deux éléments de palier (7, 8) forment, en dépassant radialement, un élément d'appui (S) approximativement à angle droit,
- les éléments de palier (7, 8) sont maintenus dans une douille (10) d'une console de palier (11) fixée à l'étrier (2) de l'essieu arrière,
- les éléments de palier (7, 8) sont constitués d'anneaux élastiques (7a, 8a) qui sont maintenus entre les surfaces d'appui (15, 16 et 17, 18), disposées à peu près parallèlement, du support (14) de l'axe de palier et de l'étrier annulaire (9),
- les anneaux élastiques (7a, 8a) entre les surfaces d'appui (15, 16 et 17, 18) sont comprimés d'une valeur (a) qui résulte d'un débordement (a) du support (14) de l'axe de palier par rapport à l'étrier annulaire (9) l'entourant.

2. Palier central selon la revendication 1, **caractérisé en ce que** les anneaux élastiques (7a, 8a) présentent, dans la zone des surfaces d'appui (15, 16) jointives, un coussin annulaire (24) élastique qui passe sur ceux-ci et qui sert de butée radiale élastique.
